# EUROPÄISCHE PATENTSCHRIFT

(11) **EP 3 227 125 B1**
(45) Veröffentlichungstag und Bekanntmachung des Hinweises auf die Patenterteilung: **12.12.2018**
(21) Anmeldenummer: 15775695.8
(22) Anmeldetag: 07.10.2015
(51) Int. Cl.: B60C 11/00

(54) **FAHRZEUGLUFTREIFEN**
PNEUMATIC VEHICLE TIRE
PNEUMATIQUE DE VÉHICULE

(30) Priorität: 05.12.2014 DE 102014224960
(43) Veröffentlichungstag der Anmeldung: 11.10.2017
(73) Patentinhaber: Continental Reifen Deutschland GmbH, 30165 Hannover (DE)
(72) Erfinder: KERSCHER, Andrea, 82057 Icking (DE); PAVON SIERRA, Viktoria, 30419 Hannover (DE); BROCKMANN, Jürgen, 30171 Hannover (DE); SENG, Matthias, 30453 Hannover (DE); MCHENRY, Joseph, Chattanooga, Tennessee 37421 (US)
(74) Vertreter: Preusser, Andrea
(86) Internationale Anmeldenummer: PCT/EP2015/073089
(87) Internationale Veröffentlichungsnummer: WO 2016/087091

(56) Entgegenhaltungen:
- EP-A1- 0 738 614
- EP-A1- 2 108 527

## Beschreibung

Die Erfindung betrifft einen Fahrzeugluftreifen in Radialbauart mit einem Laufstreifen, mit einer die Profilierung aufweisenden zweischichtigen Laufstreifencap mit einer radial äußeren Capschicht und einer radial inneren Capschicht.

Ein Fahrzeugluftreifen der eingangs genannten Art ist beispielsweise aus der EP 2 108 527 A1 bekannt. Der Laufstreifen dieses Reifens setzt sich aus einer Laufstreifenbase und einer zweischichtigen Laufstreifencap mit einer die Profilierung enthaltenden, radial äußeren Capschicht und einer radial inneren Capschicht zusammen. Die radial innere Capschicht weist beispielsweise einen Spannungswert bei 300% Dehnung von 6,1 MPa auf, die radial äußere Capschicht weist beispielsweise einen Spannungswert bei 300% Dehnung von 8,4 MPa auf Des Weiteren ist der dynamische Speichermodul, ermittelt bei 60°C und einer Dehnung von 0,5%, der radial inneren Capschicht größer als jener der radial äußeren Capschicht. Jedoch ist der bei 60°C und einer Dehnung von 10% ermittelte dynamische Speichermodul der radial inneren Capschicht kleiner ist als jener der radial äußeren Capschicht.

Aus der EP 2 147 806 B1 ist ein Fahrzeugluftreifen mit einem Laufstreifen bekannt, welcher sich aus einer die Profilierung enthaltenden, in radialer Richtung zweischichtig aufgebauten Laufstreifencap mit einer radial äußeren Capschicht und einer radial inneren Capschicht sowie einer radial innerhalb der Laufstreifencap befindlichen Laufstreifenbase zusammensetzt. Die radial äußere Capschicht weist einen dynamischen Speichermodul, ermittelt bei 100°C, 1% Dehnung und einer Frequenz von 1 Hz von 4,0 MPa bis 6,0 MPa auf. Der auf analoge Weise ermittelte dynamische Speichermodul der radial inneren Capschicht beträgt 2,5 MPa bis 4,0 MPa, insbesondere mindestens 1,0 MPa. Die Shore-A-Härten der Capschichten betragen 65 bis 85 Shore-A, wobei die Shore-A-Härte der der radial äußeren Capschicht mindestens 5 Shore-A Punkte größer als jene der radial inneren Capschicht ist. Ein Reifen mit einem solchen Laufstreifen soll gute Traktionseigenschaften sowohl bei Nässe als auch auf trockener Fahrbahn aufweisen.

Aus der EP 0 738 614 A1 ist ein Fahrzeugluftreifen mit einem aus einer einschichtigen Laufstreifencap und einer Laufstreifenbase bestehenden Laufstreifen bekannt. Die Laufstreifencap weist beispielsweise einen Spannungswert bei 300% Dehnung von 15,24 MPa, 17,4 MPa oder 15,72 MPa auf.

Der aus der EP 0 715 974 A1 bekannte Fahrzeugluftreifen weist einen Laufstreifen auf, welcher aus zumindest zwei Schichten zusammengesetzt ist, wobei die Schichten unter anderem voneinander unterschiedliche Shore-A-Härten, E-Module und Rückprallelastizitäten aufweisen sollen. Vorzugsweise nimmt der dynamische Speichermodul bei 0°C und bei 60°C von der radial äußersten Schicht zur radial innersten Schicht des Laufstreifens zu. Die Spannungswerte bei 300% Dehnung zeigen ebenfalls diese Tendenz. Ein derartiger Reifen soll einen gleichmäßigen Abrieb aufweisen.

Der aus der US 2014/0034200 A1 bekannte Fahrzeugluftreifen besitzt einen Laufstreifen mit zwei in radialer Richtung übereinander angeordneten Schichten. Die radial äußere Schicht weist gegenüber der radial inneren Schicht einen geringeren Elastizitätsmodul auf, wodurch die radial äußere Schicht dem Reifen bessere Traktionseigenschaften auf Schneefahrbahnen verleihen soll. Das Laufstreifenprofil ist ausschließlich in der radial äußeren Schicht ausgebildet.

Ein Reifen mit verbesserten Fahreigenschaften bei winterlichen Fahrbedingungen ist in der DE 199 46 446 A1 offenbart. Der Laufstreifen ist zweischichtig, bestehend aus einer Cap und einer Base, aufgebaut, wobei die Base eine größere Steifigkeit als die Cap aufweist und aus einer für den Sommereinsatz geeigneten Kautschukmischung gefertigt ist. Die Cap ist hingegen aus einer für den Wintereinsatz geeigneten Kautschukmischung hergestellt. Solange der Laufstreifen des Reifens nur wenig abgefahren ist, besitzt der Reifen daher die Eigenschaften eines Winterreifens. Bei entsprechend abgeriebenem Laufstreifen weist der Reifen eine im Vergleich zum Neuzustand bessere Sommertauglichkeit auf.

Aus der EP 1 630 003 A1 ist ein Fahrzeugluftreifen mit einem dreischichtigen Laufstreifen bekannt. Die radial innerste Schicht des Laufstreifens, die Laufstreifenbase, weist einen Elastizitätsmodul, welcher bei einer Temperatur von 70°C, einer Frequenz von 10 Hz, einer Vorkompression von 10% (initial stretch strain) sowie einer "single amplitude" von 1% ermittelt wird, von 5,0 MPa bis 7,0 MPa und einen zugehörigen Verlust-tan δ von 0,08 bis 0,15 auf. Dieser Laufstreifen soll eine hohe Rissbeständigkeit aufweisen.

Bei Reifen, die unter winterlichen Fahrbedingungen eingesetzt werden, soll ein guter Nass- und Eisgriff sichergestellt sein, wobei auch der Rollwiderstand gering sein soll und gute Handlingeigenschaften gewährleistet sein sollen. Im Allgemeinen lassen sich Laufstreifen hinsichtlich dieses Eigenschaftsprofils nicht ausführen, dass diese Eigenschaften gleichermaßen verbessert werden.

Der Erfindung liegt daher die Aufgabe zu Grunde, bei einem Reifen der eingangs genannten Art den Zielkonflikt zwischen guten Handlingeigenschaften, einem geringen Rollwiderstand und gutem Nass- und Eisgriff besser als bisher zu lösen.

Gelöst wird die gestellte Aufgabe erfindungsgemäß dadurch, dass die beiden Capschichten übereinstimmende Spannungswerte, ermittelt bei 300% Dehnung gemäß DIN 53504, aufweisen und dass die radial innere Capschicht einen größeren dynamischen Speichermodul bei 55°C als die radial äußere Capschicht aufweist, wobei der dynamische Speichermodul als über die Dehnung gemittelter dynamischer Speichermodul aus einer dynamisch-mechanischen Messung mit einem Dehnungsdurchlauf bei einer Vorkompression von 20% im Dehnungsbereich von 0,15% bis 8% und einer Frequenz von 10 Hz bei einer Temperatur von 55°C in Anlehnung an DIN 53513 ermittelt ist.

Eine besonders bevorzugten Ausführungsform der Erfindung ist dadurch gekennzeichnet, dass die radial äußere Capschicht einen kleineren dynamischen Speichermodul bei -15°C als die radial innere Capschicht aufweist, wobei der dynamische Speichermodul als über die Dehnung gemittelter dynamischer Speichermodul aus einer dynamisch-mechanischen Messung mit einem Dehnungsdurchlauf bei einer
Vorkompression von 20% im Dehnungsbereich von 0,15% bis 8% und einer Frequenz von 10 Hz bei einer Temperatur von -15°C in Anlehnung an DIN 53513 ermittelt ist.

Es hat sich herausgestellt, dass sich mit einem Laufstreifen mit Capschichten mit erfindungsgemäß unterschiedlichen Spannungsmoduln und mit übereinstimmenden Spannungswerten bei 300% Dehnung die gestellte Aufgabe sehr gut lösen lässt. Die unterschiedlichen dynamischen Speichermoduln bei 55°C in den beiden Capschichten des Laufstreifens unterstützen vor allem gute Handlingeigenschaften, auch Rollwiderstand und Nassgriff werden positiv beeinflusst, wobei sich diesbezüglich auch der in den beiden Capschichten unterschiedlichen Speichermoduln E' bei-15°C besonders günstig auswirken. Gemeinsam mit der weiteren Maßnahme, die Capschichten derart auszuführen, dass die Spannungswerte bei 300% Dehnung gleich sind, ergibt sich eine außergewöhnliche Verbesserung der Eisperformance.

Die erzielbare Eigenschaftsverbesserung bzw. Performanceverbesserung des Reifens ist bei besonderen Ausführungsvarianten der Erfindung besonders deutlich. Grundsätzlich ist es vorteilhaft, wenn die radial innere Capschicht gegenüber der radial äußeren Capschicht einen um 1 % bis 90 %, insbesondere um 20 % bis 70 %, größeren dynamischen Speichermodul bei 55° C aufweist. Besonders vorteilhaft und bevorzugt ist eine Ausführung, bei der die radial innere Capschicht gegenüber der radial äußeren Capschicht einen um 30 % bis 60 % größeren dynamischen Speichermodul bei 55° C aufweist. Die radial innere Capschicht hat daher einen versteifenden Effekt auf die radial äußere Capschicht, was vor allem für die Handlingeigenschaften auf trockenen Fahrbahnen von großem Vorteil ist.

Bei einer weiteren vorteilhaften Ausführungsform der Erfindung weist die radial äußere Capschicht gegenüber der radial inneren Capschicht einen um 0,5 % bis 97,5 %, insbesondere um 20 % bis 70 %, besonders bevorzugt um 30 % bis 60 %, kleineren dynamischen Speichermodul bei - 15° C auf. Diese Maßnahme bewirkt Unterschiede in der Kälteflexibilität der beiden Capschichten, was sich vor allem beim Nassgriff und der Eisperformance von erfindungsgemäß ausgeführten Reifen bemerkbar macht.

Für eine optimale Verbesserung der erwähnten Eigenschaften des Reifens ist es dabei vorteilhaft, wenn die radial innere Capschicht einen dynamischen Speichermodul bei 55° C von maximal 15,0 MPa aufweist und wenn ferner die radial äußere Capschicht einen dynamischen Speichermodul bei 55° C von mindestens 3,5 MPa aufweist. Des Weiteren ist es auch besonders vorteilhaft, wenn die radial innere Capschicht einen dynamischen Speichermodul bei - 15° C von maximal 170 MPa aufweist.

Erfindungsgemäß ausgeführte Fahrzeugluftreifen sind insbesondere Reifen für Personenkraftwagen, bei welchen die radial innere Capschicht, in einem nicht profilierten Bereich gemessen, eine Dicke von 2,0 mm bis 8,0 mm aufweist.

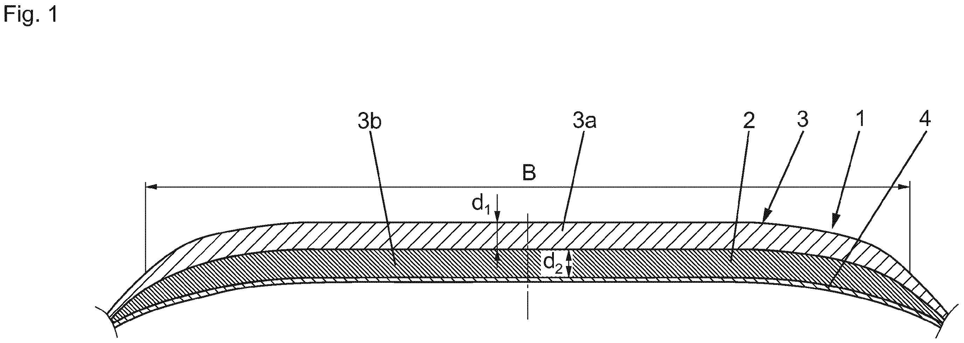

Weitere Merkmale, Vorteile und Einzelheiten der Erfindung ergeben sich aus der nachfolgenden Beschreibung und werden anhand der einzigen Figur, Fig. 1, erläutert.

### Dabei zeigt

Fig. 1 schematisch einen Querschnitt durch den Laufstreifenbereich eines Fahrzeugluftreifens mit einer Ausführungsform der Erfindung.

Die Erfindung ist grundsätzlich auf sämtliche Arten von Fahrzeugluftreifen, insbesondere auf Reifen in Radialbauart, für Personenkraftwagen (PKW) oder Vans, aber auch auf Nutzfahrzeugreifen, vor allem auf PKW-Reifen für den Einsatz unter winterlichen Fahrbedingungen, anwendbar.

In Fig. 1 ist beispielhaft und schematisch ein Laufstreifen 1 eines PKW-Reifens dargestellt. Zu den weiteren üblichen jedoch nicht dargestellten Bauteilen des Reifens gehören insbesondere ein Gürtelverband bestehend aus mehreren Gürtellagen, ferner eine Radialkarkasse, eine luftdichte Innenschicht, Seitenwände sowie Wulstbereiche mit Wulstkernen, Kernprofilen und weiteren gegebenenfalls in den Wulstbereichen vorgesehenen Verstärkungslagen. Der Laufstreifen 1 ist insbesondere in an sich bekannter Weise mit einer Profilierung versehen, die nicht dargestellt ist.

Der Laufstreifen 1 setzt sich aus einer in radialer Richtung zweischichtig ausgeführten, die Profilierung enthaltenden Laufstreifencap 3 und einer radial innerhalb der Laufstreifencap 3 angeordneten Laufstreifenbase 2 zusammen. Die Laufstreifencap 3 weist eine radial äußere Capschicht 3a und eine radial innere Capschicht 3b auf, wobei die beiden Capschichten 3a, 3b über die Breite des Reifens in der Bodenaufstandsfläche hinaus verlaufen und schulterseitig auslaufen. Die Laufstreifenbase 2 trennt die radial innere Capschicht 3b vom Gürtelverband bzw. von der Gürtelbandage und weist eine weitgehend konstante Dicke von 0,4 mm bis 2,0 mm auf. Schulterseitig können aus der Seitenwandmischung bestehende Laufstreifenauslaufbereiche vorgesehen sein.

Bei PKW- Reifen weist die radial innere Capschicht 3b im mittleren Bereich des Laufstreifens eine an nicht profilierten Stellen in radialer Richtung ermittelte Dicke d₁ von 2,0 mm bis 4,0 mm auf. Eine analog zur Dicke d₁ ermittelte Dicke d₂ der radial äußeren Capschicht 3a ergibt sich im Wesentlichen aus der Differenz der vorgesehenen maximalen Profiltiefe und der Dicke d₁ der radial inneren Capschicht 3b und beträgt bei PKW -Reifen 2,0 mm bis 8,0 mm. Die radial innere Capschicht 3b nimmt vorzugsweise 40% bis 60% des Volumens der Laufstreifencap 3 ein.

Die Capschicht 3a und die Capschicht 3b sind aus unterschiedlichen Kautschukmischungen hergestellt, derart, dass sich die dynamischen Steifigkeiten der Capschichten 3a, 3b voneinander unterscheiden, wobei die beiden Capschichten 3a, 3b darüber hinaus übereinstimmende bzw. im Wesentlichen übereinstimmende Spannungswerte bei 300% Dehnung aufweisen.

Als Maß für die dynamische Steifigkeit werden im Rahmen dieser Erfindung der dynamische Speichermodul bei 55°C und der dynamische Speichermodul bei -15°C herangezogen. Die dynamischen Speichermodule wurden als über die Dehnung gemittelte dynamische Speichermodule aus einer dynamisch-mechanischen Messung mit einem Dehnungsdurchlauf (engl. "strain sweep") bei einer Vorkompression von 20% im Dehnungsbereich von 0,15% bis 8% und einer Frequenz von 10 Hz bei einer Temperatur von 55°C bzw. -15°C in Anlehnung an DIN 53513 bestimmt. Im Nachfolgenden werden die bei 55°C ermittelten Speichermodule als "E' (+55°C)" und die bei -15°C ermittelten Speichermodule als "E' (-15°C)" bezeichnet.

Der Speichermodul E' (+55°C) der radial inneren Capschicht 3b ist um 1% bis 90%, bevorzugter Weise um 20% bis 70%, besonders bevorzugter Weise um 30% bis 60%, größer als jener der radial äußeren Capschicht 3a, wobei die radial innere Capschicht 3b einen Speichermodul E' (+55°C) von 10,1 MPa bis 17,0 MPa, insbesondere bis maximal 15,0 MPa, aufweist. Der Speichermodul E' (+55°C) der radial äußeren Capschicht 3a beträgt 2,0 MPa bis 10,0 MPa, insbesondere mindestens 3,5 MPa. Die radial innere Capschicht 3b ist daher steifer als die radial äußere Capschicht 3a und trägt zu einer Verbesserung der Handlingeigenschaften des Fahrzeugluftreifens bei.

Die radial äußere Capschicht 3a weist einen um 0,5% bis 97,5%, bevorzugter Weise um 20% bis 70%, und besonders bevorzugter Weise um 30% bis 60% kleineren Speichermodul E' (-15°C) als die radial innere Capschicht 3b auf, welcher 5,0 MPa bis 30,0 MPa und insbesondere 7,0 MPa bis 27,0 MPa beträgt. Der Speichermodul E' (-15°C) der radial innere Capschicht 3b beträgt 30,1 MPa bis 200,0 MPa, insbesondere bis zu 170,0 MPa. Die radial äußere Capschicht 3a besitzt daher eine bessere, d.h. höhere, Kälteflexibilität als die radial innere Capschicht 3b und trägt dadurch zu einer Verbesserung der Schnee- und Nassgriffeigenschaften des Fahrzeugluftreifens bei.

Die Capschichten 3a und 3b weisen ferner unterschiedliche Härten nach DIN ISO 7619-1 (Shore-A-Härte) bei Raumtemperatur auf.

Als Maß für die semidynamische Steifigkeit dient der Spannungswert bei 300% statischer Dehnung bei Raumtemperatur gemäß DIN 53504 ("D 300%"). Die D 300%-Werte der Capschichten 3a, 3b sind gleich groß und betragen 4,0 MPa bis 12,0 MPa, insbesondere 6,0 MPa bis 10,0 MPa. Unter gleich großen D 300%-Werten sind solche zu verstehen, die um bis zu 2% voneinander abweichen.

Die nachfolgenden Tabellen 1 bis 3 enthalten Beispiele von Mischungszusammensetzungen M1₁ bis M3₁ für die radial äußere Capschicht 3a und Mischungszusammensetzungen M1₂ bis M3₂ für die radial innere Capschicht 3b einer Laufstreifencap, wobei die Mengenangaben in der in der Kautschuktechnologie üblichen Einheit phr (parts per hundred rubber) angegeben sind. Die Mengenangaben beziehen sich dabei jeweils auf die Massenanteile des Grundpolymers bzw. bei Polymerblends auf jene der Grundpolymere.

**Tabelle 1**

| **Bestandteile** | **Einheit** | **M1₁** | **M1₂** |
|---|---|---|---|
| NR ^{a)} | phr | 20 | 5 |
| BR ^{b)} | phr | 50 | 27 |
| SBR ^{c)} | phr | 41,25 | |
| SBR ^{d)} | phr | | 68 |
| Kieselsäure ^{e)} | phr | 85 | 85 |
| Ruß N 399 | phr | 14 | 14 |
| Weichmacher ^{f)} | phr | 34 | 49 |
| Silan ^{g)} | phr | 6 | 6,2 |
| Sonst. Zus. ^{h)} | phr | 16,7 | 16,7 |
| S und Beschleuniger ⁱ⁾ | phr | 5,9 | 5,9 |

| **Physikalische Eigenschaften** | | | |
|---|---|---|---|
| Shore Härte A b. RT | Shore A | 57 | 63 |
| D 300% | MPa | 5,9 | 5,9 |
| E' (-15°C) | MPa | 17,8 | 28,4 |
| E' (+55°C) | MPa | 6,7 | 8 |

| | | | |
|---|---|---|---|
| Verwendete Substanzen ^{a)} Naturkautschuk TSR ^{b)} BR: BUNA CB 24, Fa. Lanxess ^{c)} SBR: Buna VSL 5025-2, Fa. Lanxess ^{d)} SBR: Sprintan™ SLR 3402, Fa. Styron ^{e)} Kieselsäure Ultrasil VN3, Fa. Evonik ^{f)} Weichmacher Vivatec C500, Fa. Thai Base Public Company Ltd. ^{g)} Silan Si263, Fa. Evonik ^{h)} Sonstige Zusatzstoffe: Alterungsschutzmittel 6PPD, Zinkoxid, Stearinsäure ⁱ⁾ Schwefel und Beschleuniger CBS | | | |

**Tabelle 2**

| **Bestandteile** | **Einheit** | **M2₁** | **M2₂** |
|---|---|---|---|
| NR ^{a)} | phr | 10 | 10 |
| BR ^{b)} | phr | 67 | 33 |
| SBR ^{c)} | phr | 23 | 57 |
| Kieselsäure ^{d)} | phr | 103 | 103 |
| Ruß N 399 | phr | 5 | 5 |
| Weichmacher ^{e)} | phr | 57,3 | 41,3 |
| Silan ^{f)} | phr | 8,5 | 8,5 |
| Sonst. Zus. ^{g)} | phr | 16,7 | 16,7 |
| S und Beschleuniger ^{h)} | phr | 9,83 | 9,83 |

| **Physikalische Eigenschaften** | | | |
|---|---|---|---|
| Shore Härte A b. RT | Shore A | 65 | 72 |
| D 300% | MPa | 10 | 10 |
| E' (-15°C) | MPa | 16 | 23 |
| E'(+55°C) | MPa | 7,8 | 11,3 |

| | | | |
|---|---|---|---|
| Verwendete Substanzen ^{a)} Naturkautschuk TSR ^{b)} BR: BUNA CB 24, Fa. Lanxess ^{c)} SBR: Sprintan™ SLR 3402, Fa. Styron ^{d)} Kieselsäure Zeosil® 1165 MP, Fa. Rhodia ^{e)} Weichmacher Vivatec C500, Fa. Thai Base Public Company Ltd. ^{f)} Silan Si263, Fa. Evonik ^{g)} Sonstige Zusatzstoffe: Alterungsschutzmittel 6PPD, Zinkoxid, Stearinsäure ^{h)} Schwefel und Beschleuniger CBS | | | |

**Tabelle 3**

| **Bestandteile** | **Einheit** | **M3₁** | **M3₂** |
|---|---|---|---|
| NR ^{a)} | phr | 10 | 10 |
| SBR ^{b)} | phr | 90 | 90 |
| Kieselsäure ^{c)} | phr | 130 | 140 |
| Ruß N 399 | phr | 5 | 5 |
| Weichmacher | phr | 63 | 63 |
| Silan ^{d)} | phr | 16 | 17 |
| Sonst. Zus. ^{e)} | phr | 11 | 11 |
| S und Beschleuniger ^{f)} | phr | 5,3 | 6 |

| **Physikalische Eigenschaften** | | | |
|---|---|---|---|
| Shore Härte A b. RT | Shore A | 60 | 67 |
| D 300% | MPa | 8 | 8 |
| E' (-15°C) | MPa | 19,5 | 33,5 |
| E' (+55°C) | MPa | 7,1 | 9,2 |

| | | | |
|---|---|---|---|
| Verwendete Substanzen a) Naturkautschuk TSR b) SBR: Sprintan™ SLR 3402, Fa. Styron c) Kieselsäure Ultrasil VN3, Fa. Evonik d) Silan NXT, Fa. Momentive e) Sonstige Zusatzstoffe: Alterungsschutzmittel 6PPD, Zinkoxid, Stearinsäure f) Schwefel und Beschleuniger CBS | | | |

Mit erfindungsgemäß ausgeführten PKW-Reifen mit einer Laufstreifencap gemäß Tabelle 1 wurden Reifentest im Vergleich mit Referenzreifen (R_{ref1}, R_{ref2}) durchgeführt. Der Referenzreifen R_{ref1} wies einen Monolaufstreifen (einschichtige Laufstreifencap) aus der Mischung M1₁ aus Beispiel 1 auf, der Referenzreifen R_{ref2} einen Monolaufstreifen (einschichtige Laufstreifencap) aus der Mischung M2₁ aus Beispiel 1.

Die ermittelten Werte für die unten angeführten Reifeneigenschaften wurden in Performance (Leistung) umgerechnet, wobei der Referenzreifen R_{ref1} bei jeder getesteten Reifeneigenschaft auf 100% Performance normiert wurde und die Eigenschaften des Referenzreifen R_{ref2} sowie jene des erfindungsgemäß ausgeführten Reifens relativ zum Referenzreifen R_{ref1} angegeben werden. Hierbei bedeuten Werte <100% eine Verschlechterung der jeweiligen Eigenschaft, während Werte > 100% eine Verbesserung darstellen. Folgende Testverfahren wurden angewandt:
• Rollwiderstand: gemäß ISO 28580
• Nassbremsen: ABS-Bremsen aus 80 km/h, nasser Asphalt, niedriges µ (low µ)
• Aquaplaning: Beschleunigung im Wasserbecken von 9 mm Tiefe und Bestimmung der Geschwindigkeit, bei der der Schlupf ein definiertes Maximum von 15% überschreitet
• Eisbremsen: ABS-Bremsen bei einer Startgeschwindigkeit von 22km/h auf polierter Eisoberfläche

**Tabelle 4: Reifenergebnisse**

| **Reifeneigenschaft** | **Einheit** | **R_{ref1}** | **R_{ref2}** | **Reifen gemäß der Erfindung** |
|---|---|---|---|---|
| Rollwiderstand | % | 100 | 96 | 98 |
| Nassbremsen | % | 100 | 102 | 101 |
| Aquaplaning | % | 100 | 104 | 104 |
| Eisbremsen | % | 100 | 102 | 107 |

Wie die Werte aus Tabelle 4 zeigen, war der Referenzreifen R_{ref2} erwartungsgemäß im Rollwiderstand schlechter, neigte aber weniger zu Aquaplaning als der Referenzreifen R_{ref1}. Die höhere Härte des Laufstreifens des Referenzreifens R_{ref2} führt infolge der höheren Dämpfung zu einem schlechten Rollwiderstand. Die besseren Werte bei Aquaplaing und Eisbremsen sind auf die höheren Speichermoduln E'(55°C) und E'(-15°C) zurückzuführen, da dadurch der Laufstreifen steifer ist.

Der Reifen gemäß der Erfindung erwies sich als gleichgut wie der Referenzreifen R_{ref2} hinsichtlich Rollwiderstand und Nassbremsen. Besonders deutlich ist die signifikante Verbesserung von Eisbremsen und Nassgriff gegenüber dem Referenzreifen R_{ref1}, bei Eisbremsen auch gegenüber dem Referenzreifen R_{ref2}. Die erzielten Eigenschaftsverbesserungen dürften auf unterschiedlichen Werte für E'(55°C) und E'(-15°C) sowie auf die gleich großen Spannungswerte D300% in den beiden Capschichten 2a, 2b des Laufstreifens zurückzuführen sein.

### Bezugsziffernliste

- 1: Laufstreifen
- 2: Laufstreifenbasee
- 3: Laufstreifencap
- 3a: radial äußere Capschicht
- 3b: radial innere Capschicht

## Patentansprüche

1. Fahrzeugluftreifen in Radialbauart mit einem Laufstreifen (1) mit einer eine die Profilierung aufweisenden zweischichtigen Laufstreifencap (3) mit einer radial äußeren Capschicht (3a) und einer radial inneren Capschicht (3b),
**dadurch gekennzeichnet,**
**dass** die beiden Capschichten (3a, 3b) übereinstimmende Spannungswerte, ermittelt bei 300% Dehnung gemäß DIN 53504, aufweisen und
**dass** die radial innere Capschicht (3b) einen größeren dynamischen Speichermodul bei 55°C als die radial äußere Capschicht (3a) aufweist, wobei der dynamische Speichermodul als über die Dehnung gemittelter dynamischer Speichermodul aus einer dynamisch-mechanischen Messung mit einem Dehnungsdurchlauf bei einer Vorkompression von 20% im Dehnungsbereich von 0,15% bis 8% und einer Frequenz von 10 Hz bei einer Temperatur von 55°C in Anlehnung an DIN 53513 ermittelt ist.

2. Fahrzeugluftreifen nach Anspruch 1, **dadurch gekennzeichnet, dass** die radial äußere Capschicht (3a) einen kleineren dynamischen Speichermodul bei -15°C als die radial innere Capschicht (3b) aufweist, wobei der dynamische Speichermodul als über die Dehnung gemittelter dynamischer Speichermodul aus einer dynamisch-mechanischen Messung mit einem Dehnungsdurchlauf bei einer Vorkompression von 20% im Dehnungsbereich von 0,15% bis 8% und einer Frequenz von 10 Hz bei einer Temperatur von -15°C in Anlehnung an DIN 53513 ermittelt ist.

3. Fahrzeugluftreifen nach Anspruch 1, **dadurch gekennzeichnet, dass** die radial innere Capschicht (3b) gegenüber der radial äußeren Capschicht (3a) einen um 1% bis 90%, insbesondere um 20% bis 70%, größeren dynamischen Speichermodul bei 55°C aufweist.

4. Fahrzeugluftreifen nach einem der Ansprüche 1 bis 3, **dadurch gekennzeichnet, dass** die radial innere Capschicht (3b) gegenüber der radial äußeren Capschicht (3a) einen um 30% bis 60% größeren dynamischen Speichermodul bei 55°C aufweist.

5. Fahrzeugluftreifen nach einem der Ansprüche 1 bis 4, **dadurch gekennzeichnet, dass** die radial äußere Capschicht (3a) gegenüber der radial inneren Capschicht (3b) einen um 0,5% bis 97,5%, insbesondere um 20% bis 70%, kleineren dynamischen Speichermodul bei -15°C aufweist.

6. Fahrzeugluftreifen nach einem der Ansprüche 1 bis 5, **dadurch gekennzeichnet, dass** die radial äußere Capschicht (3a) gegenüber der radial inneren Capschicht (3b) einen um 30% bis 60% kleineren dynamische Speichermodul bei -15°C aufweist.

7. Fahrzeugluftreifen nach einem der Ansprüche 1 bis 6, **dadurch gekennzeichnet, dass** die radial innere Capschicht (3b) einen dynamischen Speichermodul bei 55°C von maximal 15,0 MPa aufweist.

8. Fahrzeugluftreifen nach einem der Ansprüche 1 bis 7, **dadurch gekennzeichnet, dass** die radial äußere Capschicht (3a) einen dynamischen Speichermodul bei 55°C von mindestens 3,5 MPa aufweist.

9. Fahrzeugluftreifen nach einem der Ansprüche 1 bis 8, **dadurch gekennzeichnet, dass** die radial innere Capschicht (3b) einen dynamischen Speichermodul bei -15°C von maximal 170 MPa aufweist.

10. Fahrzeugluftreifen nach einem der Ansprüche 1 bis 9, welcher ein Reifen für Personenkraftwagen ist, **dadurch gekennzeichnet, dass** die radial innere Capschicht (3b) eine Dicke (d₁) von 2,0 mm bis 8,0 mm aufweist.

## Claims

1. Pneumatic vehicle tyre of a radial design with a tread (1) having a profiled two-layered tread cap (3) with a radially outer cap layer (3a) and a radially inner cap layer (3b),
**characterized in that**
the two cap layers (3a, 3b) have identical stress values, determined at 300% elongation according to DIN 53504, and
**in that** the radially inner cap layer (3b) has a greater dynamic storage modulus at 55°C than the radially outer cap layer (3a), the dynamic storage modulus being determined as the dynamic storage modulus averaged over the strain from a dynamic-mechanical measurement with a strain sweep under a precompression of 20% in the strain range of 0.15% to 8% and a frequency of 10 Hz at a temperature of 55°C on the basis of DIN 53513.

2. Pneumatic vehicle tyre according to Claim 1, **characterized in that** the radially outer cap layer (3a) has a smaller dynamic storage modulus at -15°C than the radially inner cap layer (3b), the dynamic storage modulus being determined as the dynamic storage modulus averaged over the strain from a dynamic-mechanical measurement with a strain sweep under a precompression of 20% in the strain range of 0.15% to 8% and a frequency of 10 Hz at a temperature of -15°C on the basis of DIN 53513.

3. Pneumatic vehicle tyre according to Claim 1, **characterized in that** the radially inner cap layer (3b) has in comparison with the radially outer cap layer (3a) a dynamic storage modulus at 55°C that is greater by 1% to 90%, in particular by 20% to 70%.

4. Pneumatic vehicle tyre according to one of Claims 1 to 3, **characterized in that** the radially inner cap layer (3b) has in comparison with the radially outer cap layer (3a) a dynamic storage modulus at 55°C that is greater by 30% to 60%.

5. Pneumatic vehicle tyre according to one of Claims 1 to 4, **characterized in that** the radially outer cap layer (3a) has in comparison with the radially inner cap layer (3b) a dynamic storage modulus at -15°C that is smaller by 0.5% to 97.5%, in particular by 20% to 70%.

6. Pneumatic vehicle tyre according to one of Claims 1 to 5, **characterized in that** the radially outer cap layer (3a) has in comparison with the radially inner cap layer (3b) a dynamic storage modulus at -15°C that is smaller by 30% to 60%.

7. Pneumatic vehicle tyre according to one of Claims 1 to 6, **characterized in that** the radially inner cap layer (3b) has a dynamic storage modulus at 55°C of at most 15.0 MPa.

8. Pneumatic vehicle tyre according to one of Claims 1 to 7, **characterized in that** the radially outer cap layer (3a) has a dynamic storage modulus at 55°C of at least 3.5 MPa.

9. Pneumatic vehicle tyre according to one of Claims 1 to 8, **characterized in that** the radially inner cap layer (3b) has a dynamic storage modulus at -15°C of at most 170 MPa.

10. Pneumatic vehicle tyre according to one of Claims 1 to 9, which is a tyre for a passenger car, **characterized in that** the radially inner cap layer (3b) has a thickness (d₁) of 2.0 mm to 8.0 mm.

## Revendications

1. Pneumatique de véhicule du type radial avec une bande de roulement (1) avec une chape de bande de roulement (3) en deux couches dont une présentant le profilage, avec une couche de chape radialement extérieure (3a) et une couche de chape radialement intérieure (3b),
**caractérisé en ce que** les deux couches de chape (3a, 3b) présentent des valeurs de tension concordantes, déterminées à 300 % d'allongement selon DIN 53504, et **en ce que** la couche de chape radialement intérieure (3b) présente un module de mémoire dynamique à 55°C plus élevé que la couche de chape radialement extérieure (3a), dans lequel le module de mémoire dynamique est déterminé comme le module de mémoire dynamique moyen sur l'allongement à partir d'une mesure dynamico-mécanique avec un parcours d'allongement avec une pré-compression de 20 % dans le domaine d'allongement de 0,15 % à 8 % et une fréquence de 10 Hz à une température de 55°C selon la norme DIN 53513.

2. Pneumatique de véhicule selon la revendication 1, **caractérisé en ce que** la couche de chape radialement extérieure (3a) présente un module de mémoire dynamique à -15°C moins élevé que la couche de chape radialement intérieure (3b), dans lequel le module de mémoire dynamique est déterminé comme le module de mémoire dynamique moyen sur l'allongement à partir d'une mesure dynamico-mécanique avec un parcours d'allongement avec une pré-compression de 20 % dans le domaine d'allongement de 0,15 % à 8 % et une fréquence de 10 Hz à une température de -15°C selon la norme DIN 53513.

3. Pneumatique de véhicule selon la revendication 1, **caractérisé en ce que** la couche de chape radialement intérieure (3b) présente par rapport à la couche de chape radialement extérieure (3a) un module de mémoire dynamique à 55°C plus élevé de 1 % à 90 %, en particulier de 20 % à 70 %.

4. Pneumatique de véhicule selon l'une quelconque des revendications 1 à 3, **caractérisé en ce que** la couche de chape radialement intérieure (3b) présente par rapport à la couche de chape radialement extérieure (3a) un module de mémoire dynamique à 55°C plus élevé de 30 % à 60 %.

5. Pneumatique de véhicule selon l'une quelconque des revendications 1 à 4, **caractérisé en ce que** la couche de chape radialement extérieure (3a) présente par rapport à la couche de chape radialement intérieure (3b) un module de mémoire dynamique à -15°C moins élevé de 0,5 % à 97,5 %, en particulier de 20 % à 70 %.

6. Pneumatique de véhicule selon l'une quelconque des revendications 1 à 5, **caractérisé en ce que** la couche de chape radialement extérieure (3a) présente par rapport à la couche de chape radialement intérieure (3b) un module de mémoire dynamique à -15°C moins élevé de 30 % à 60 %.

7. Pneumatique de véhicule selon l'une quelconque des revendications 1 à 6, **caractérisé en ce que** la couche de chape radialement intérieure (3b) présente un module de mémoire dynamique à 55°C de 15,0 MPa au maximum.

8. Pneumatique de véhicule selon l'une quelconque des revendications 1 à 7, **caractérisé en ce que** la couche de chape radialement extérieure (3a) présente un module de mémoire dynamique à 55°C de 3,5 MPa au minimum.

9. Pneumatique de véhicule selon l'une quelconque des revendications 1 à 8, **caractérisé en ce que** la couche de chape radialement intérieure (3b) présente un module de mémoire dynamique à -15°C de 170 MPa au maximum.

10. Pneumatique de véhicule selon l'une quelconque des revendications 1 à 9, qui est un pneumatique pour une voiture particulière, **caractérisé en ce que** la couche de chape radialement intérieure (3b) présente une épaisseur (d₁) de 2,0 mm à 8,0 mm.
